# EUROPEAN PATENT SPECIFICATION

(11) **EP 4 050 065 B1**
(45) Date of publication and mention of the grant of the patent: **26.11.2025**
(21) Application number: 20878378.7
(22) Date of filing: 20.10.2020
(51) Int. Cl.: C08L 71/12, C08K 5/20, C08L 25/06, C08K 3/22, C08K 3/26, C08K 5/098, C08K 7/14, C08K 9/06, C08K 9/08

(54) **RESIN COMPOSITIONS AND METHODS FOR PRODUCING SAME, MOLDED ARTICLES, MACHINE PARTS, AND HOUSINGS**
HARZZUSAMMENSETZUNGEN UND VERFAHREN ZU DEREN HERSTELLUNG, FORMTEILE, MASCHINENTEILE UND GEHÄUSE
COMPOSITIONS DE RÉSINE ET LEURS PROCÉDÉS DE PRODUCTION, ARTICLES MOULÉS, PIÈCES DE MACHINE ET BOÎTIERS

(30) Priority: 21.10.2019 JP 2019192303
(43) Date of publication of application: 31.08.2022
(73) Proprietor: Asahi Kasei Kabushiki Kaisha, Tokyo 1000006 (JP)
(72) Inventor: MOTOYAMA, Keiko, Tokyo 100-0006 (JP)
(74) Representative: Strehl & Partner mbB
(86) International application number: PCT/JP2020/039421
(87) International publication number: WO 2021/079883

(56) References cited:
- WO-A2-02/057363
- WO-A2-2013/080129
- JP-A- 2004 517 993
- JP-A- 2007 291 336
- JP-A- 2011 162 651
- JP-A- 2016 033 196
- JP-A- H05 320 506
- JP-A- S63 312 352
- US-A1- 2015 080 515

## Description

### TECHNICAL FIELD

The present disclosure relates to a resin composition and a method of producing the same, a molded article, a mechanical component, and a housing.

### BACKGROUND

Polyphenylene ether-based resins are excellent in heat resistance, hot water resistance, acid resistance, alkali resistance, and the like. Therefore, they have been used for mechanical components and housings related to plumbing of water such as pumps, water meters, heat exchangers, water purifiers, and water softeners.

In particular, polyphenylene ether-based resins reinforced by an inorganic filler such as glass fibers have been used in components or housings for which mechanical properties such as the pressure resistance strength and the pressure fatigue resistance characteristic are required.

There has been a problem, however, in that the adhesive strength of the interface between an inorganic filler and a polyphenylene ether-based resin gradually decreases by hydrolysis under a hot water environment, leading to reduction in the mechanical properties of the material over time.

In other words, a polyphenylene ether-based resin reinforced with an inorganic filler has been demanded which is excellent in mechanical properties such as the pressure resistance strength and the pressure fatigue resistance characteristic, and can retain those mechanical properties at high levels over a long period of time even under a hot water environment. Resin compositions as disclosed in PTLs 1 to 3 therefore have been proposed.

PTL 1 discloses a pump component obtained from a modified polyphenylene ether-based resin composition produced by replacing a part or all of a polyphenylene ether-based resin with a modified polyphenylene ether-based resin modified with an unsaturated carboxylic acid or derivative thereof in a resin composition consisting of the polyphenylene ether-based resin, an aromatic vinyl compound-based polymer, and an aromatic vinyl compound copolymer, and the blending an inorganic filler, for the purpose of improving the hot water resistance.

PTL 2 discloses a resin composition containing a polyphenylene ether-based resin having a weight average molecular weight after melt-kneading of less than 70,000, an atactic homopolystyrene, a hydrogenated block copolymer containing a polymer block composed mainly of an aromatic vinyl compound and a polymer block composed mainly of a conjugated diene compound, a compound having a functional group such as a carboxyl group, and a surface-treated inorganic filler, for the purpose of improving the melt flowability or the vibration fatigue characteristic.

PTL 3 discloses a resin composition containing a polyphenylene ether having a weight average molecular weight after melt-kneading of 70,000 or more, a polystyrene, and glass fibers, for the purpose of improving the hydrolysis resistance.

### CITATION LIST

### Patent Literature

PTL 1: JP 3966941 B
PTL 2: JP 6356336 B
PTL 3: JP 6170502 B

WO 02/057363 A2 discloses, in examples, a method for producing a resin composition comprising melt-kneading a polyphenylene ether, a homopolystyrene, glass fibers and an additive comprising magnesium oxide.

JP H05 320506 A discloses, in examples. The melt-kneading of a polyphenylene ether, a polystyrene, glass-fibers and an inorganic filler.

JP 2007 291336 A, JP 2011 162651 A and US 2015/080515 disclose the application of inorganic fillers to impart hydrolysis resistance to resin compositions.

### SUMMARY

### (Technical Problem)

The resin composition disclosed in PTL 1, however, still has room for improvement in retention of the mechanical properties under a hot water environment.

The resin composition disclosed in PTL 2 is excellent in mechanical properties such as the vibration fatigue characteristic. However, there is still room for improvement in retention of mechanical properties under a hot water environment.

The resin composition disclosed in PTL 3 still has room for improvement in retention of mechanical properties under a hot water environment.

As discussed above, none of the resin compositions disclosed in the prior art documents cannot retain their mechanical properties at high levels for a long period of time even under a hot water environment.

It is an object of the present disclosure to provide a resin composition which is excellent in mechanical properties such as the fatigue resistance characteristic and can retain those mechanical properties at high levels over a long period of time even under a hot water environment.

### (Solution to Problem)

As a result of extensive studies to solve the above problem, the present inventor has found that a resin composition containing a polyphenylene ether-based resin (a), a homopolystyrene (c), glass fibers (e), and one or more compounds (f) selected from the group consisting of magnesium oxide, magnesium hydroxide, magnesium carbonate, magnesium silicate, aluminum hydroxide, aluminum silicate, and hydrotalcite at certain ratio is excellent in mechanical properties such as the fatigue resistance characteristic and can retain those mechanical properties at high levels over a long period of time even under a hot water environment, thereby completing the present disclosure.

The present invention is set out in the appended claims.

### (Advantageous Effect)

The resin compositions of the present disclosure are resin compositions excellent in mechanical properties such as the tensile strength, the impact strength, and the fatigue resistance characteristic, and can retain those mechanical properties at high levels over a long period of time even under a hot water environment, and a molded articles thereof can be suitably used as a mechanical component, a housing, and the like related to plumbing of water.

### DETAILED DESCRIPTION

The following provides a detailed description of an embodiment of the present disclosure (hereinafter, referred to as the "present embodiment"). The following embodiment is described by way of example only, and the present disclosure is not limited to the embodiment and various modifications may be made without departing from the scope of the claims.

### (Resin composition)

A resin composition of the present embodiment contains
a polyphenylene ether-based resin (a);
a homopolystyrene (c);
glass fibers (e); and
one or more compounds (f) selected from the group consisting of magnesium oxide, magnesium hydroxide, magnesium carbonate, magnesium silicate, aluminum hydroxide, aluminum silicate, and hydrotalcite, and may optionally contain other components.

### - Polyphenylene ether-based resin (a) -

Examples of the polyphenylene ether-based resin (a) (hereinafter also referred to simply as the (a) component) used in the present embodiment include, but are not limited to, a homopolymer formed from a repeating unit structure represented by the following formula (1) and/or a copolymer having a repeating unit structure represented by the following formula (1), for example: 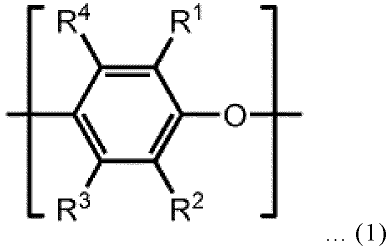 [in the formula, R¹, R², R³, and R⁴ are each independently a monovalent group selected from the group consisting of a hydrogen atom, a halogen atom, a primary alkyl group having a carbon atom number of 1 to 7, a secondary alkyl group having a carbon atom number of 1 to 7, a phenyl group, a haloalkyl group, an aminoalkyl group, an oxyhydrocarbon group, and an oxyhalohydrocarbon group in which a halogen atom and an oxygen atom are separated by at least two carbon atoms.]

Such a polyphenylene ether-based resin is not particularly limited, and any known one may be used. Specific examples of polyphenylene ether-based resin include homopolymers such as poly(2,6-dimethyl-1,4-phenylene ether), poly(2-methyl-6-ethyl-1,4-phenylene ether), poly(2-methyl-6-phenyl-1,4-phenylene ether), and poly(2,6-dichloro-1,4-phenylene ether); and copolymers such as copolymers of 2,6-dimethylphenol with other phenols such as 2,3,6-trimethylphenol and 2-methyl-6-butylphenol, for example.

Particularly preferred as the polyphenylene ether-based resin, among other things, from the perspectives of availability and various properties of the resulting resin composition, are poly(2,6-dimethyl-1,4-phenylene ether) and a copolymer of 2,6-dimethylphenol and 2,3,6-trimethylphenol, and particularly preferred is poly(2,6-dimethyl-1,4-phenylene ether).

The above-described polyphenylene ether-based resins may be used alone or in combination of two or more.

The polyphenylene ether-based resin may be produced by a known method.

Examples of the production method of the polyphenylene ether-based resin include, but are not limited to, a method of oxidatively polymerizing 2,6-xylenol using a mixture of a cuprous salt and an amine as a catalyst as described in US 3306874 B to Hay, and other methods described in US 3306875 B, US 3257357B, US 3257358 B, JP S52-17880 B, JP S50-51197 A, JP S63-152628 A, and so on, for example.

From the viewpoint of setting the weight average molecular weight of the (a) component at the stage after the resin composition has been formed (stage after melt-kneading) to fall within a range described later, the weight average molecular weight of the (a) component at the stage of the raw material (stage before melt-kneading) is set such that the lower limit thereof is preferably 30,000 or more, more preferably 35,000 or more, and particularly preferably 40,000 or more, and the upper limit thereof is preferably 80,000 or less, more preferably 75,000 or less, and particularly preferably 55,000 or less.

The weight average molecular weight of the (a) component at the stage after the resin composition has been formed (stage after melt-kneading) is preferably 35,000 or more, more preferably 40,000 or more, and particularly preferably 45,000 or more from the viewpoint of enhancing the fatigue resistance characteristic of the resin composition, and is preferably 95,000 or less, more preferably 90,000 or less, and particularly preferably 70,000 or less from the viewpoint of enhancing the melt flowability of the resin composition.

Note that the weight average molecular weight can be measured by gel permeation chromatography (mobile phase: chloroform; standard material: polystyrene) according to a conventional and commonly known method.

The content of the (a) component per 100 mass% of the resin composition is 20 mass% or more, preferably 25 mass% or more, and more preferably 30 mass% or more from the viewpoint of enhancing the heat resistance and the fatigue resistance characteristic of the resin composition, and is 50 mass% or less, preferably 45 mass% or less, and more preferably 40 mass% or less from the viewpoint of enhancing the melt flowability of the resin composition.

### - Polyphenylene ether-based resin modified with unsaturated carboxylic acid or acid anhydride thereof (b) -

The resin composition of the present embodiment may include a polyphenylene ether-based resin modified with an unsaturated carboxylic acid or acid anhydride thereof (b) (hereinafter, simply referred to as the (b) component). The polyphenylene ether-based resin modified with an unsaturated carboxylic acid or acid anhydride thereof (b) (hereinafter, simply referred to as the (b) component) in the present embodiment is a polyphenylene ether-based resin in which the unsaturated carboxylic acid or acid anhydride thereof is covalently bonded to a side chain or a terminal of the polyphenylene ether-based resin.

Examples of the polyphenylene ether-based resin used in the (b) component include, but are not particularly limited to, a homopolymer formed from a repeating unit structure represented by the aforementioned formula (1) and/or a copolymer including a repeating unit structure represented by the formula (1), for example.

Specific examples include homopolymers such as poly(2,6-dimethyl-1,4-phenylene ether), poly(2-methyl-6-ethyl-1,4-phenylene ether), poly(2-methyl-6-phenyl-1,4-phenylene ether), and poly(2,6-dichloro-1,4-phenylene ether); copolymers such as copolymers of 2,6-dimethyl phenol with other phenols such as 2,3,6-trimethyl phenol and 2-methyl-6-butyl phenol, for example, among which poly(2,6-dimethyl-1,4-phenylene ether) and copolymers of 2,6-dimethyl phenol and 2,3,6-trimethyl phenol are preferable, and poly(2,6-dimethyl-1,4-phenylene ether) is more preferable from the viewpoint of availability.

These may be used alone or in combination of two or more.

Examples of the unsaturated carboxylic acid or acid anhydride thereof used in the (b) component include, but are not particularly limited to, unsaturated monocarboxylic acids such as acrylic acid and methacrylic acid; unsaturated di(tri)carboxylic acids such as maleic acid, fumaric acid, citraconic acid, mesaconic acid, itaconic acid, glutaconic acid, aconitic acid, muconic acid, and 4-cyclohexene-1,2-dicarboxylic acid; and acid anhydrides of unsaturated di(tri)carboxylic acids such as maleic anhydride, citraconic anhydride, itaconic anhydride, glutaconic anhydride, aconitic anhydride, and 4-cyclohexene-1,2-dicarboxylic anhydride, for example. In particular, maleic acid and maleic anhydride are preferred from the viewpoint of ease of denaturation and availability. These may be used alone or in combination of two or more.

As will be described later, the (b) component enhances the mechanical properties such as the tensile strength, the impact strength, and the fatigue resistance characteristic of the resin composition, as well as enhancing retention of those mechanical properties under a hot water environment (hereinafter, also referred to as "hot water resistance") by bonding to the surfaces of glass fibers via a silane coupling agent to enhance the adhesive strength of the interface between the glass fibers and the polyphenylene ether-based resin (a).

The modification ratio of the (b) component by the unsaturated carboxylic acid or acid anhydride thereof (the amount of addition (in percentage) of the unsaturated carboxylic acid or acid anhydride thereof per 100 mass% of the polyphenylene ether-based resin composing the (b) component) is preferably 0.05 mass% or more, more preferably 0.1 mass% or more, and particularly preferably 0.3 mass% or more from the viewpoint of enhancing the tensile strength, the impact strength, the fatigue resistance characteristic, and the hot water resistance of the resin composition, and is preferably 1.5 mass% or less, more preferably 1 mass% or less, and particularly preferably 0.8 mass% or less from the viewpoint of enhancing the hot water resistance of the resin composition.

Note that the modification ratio of the (b) component by the unsaturated carboxylic acid or acid anhydride thereof can be determined using potentiometric titration, a nuclear magnetic resonance (NMR) spectrometer, or the like.

The content of the (b) component per 100 mass% of the resin composition is preferably 0.1 mass% or more, more preferably 0.5 mass% or more, particularly preferably 1 mass% or more from the viewpoint of enhancing the tensile strength, the impact strength, the fatigue resistance characteristic, and the hot water resistance of the resin composition, and is preferably 9 mass% or less, more preferably 6 mass% or less, and particularly preferably 3 mass% or less from the viewpoint of enhancing the hot water resistance of the resin composition.

The (b) component can be produced, for example, by melt-kneading the polyphenylene ether-based resin and the unsaturated carboxylic acid or acid anhydride thereof using a single screw extruder or a twin screw extruder.

In the present embodiment, the composition produced by melt-kneading as described above may be used as the (b) component as it is.

Upon production of the (b) component, an organic peroxide such as hydroperoxides, dialkyl peroxides, or diacyl peroxides may be added as a radical reaction initiator if necessary.

In addition to the polyphenylene ether-based resin and the unsaturated carboxylic acid or acid anhydride thereof, a resin such as a homopolystyrene, a rubber-modified polystyrene, or a hydrogenated block copolymer produced through hydrogenation of at least a part of a block copolymer containing a polymer block composed mainly of a styrene-based compound and a polymer block composed mainly of a conjugated diene compound may also be added.

However, if the polyphenylene ether-based resin (a) and the unsaturated carboxylic acid or acid anhydride thereof are melt-kneaded at the stage in which the resin composition of the present embodiment is being produced (stage of melt-kneading), a desired hot water resistance is less likely to be achieved.

### - Homopolystyrene (c) -

Examples of the homopolystyrene (c) (hereinafter, simply referred to as the (c) component) used in the present embodiment include, but are not particularly limited to, a homopolymer of a styrene-based compound and a copolymer of two or more styrene-based compounds having a stereoregularity selected from atacticity, syndiotacticity, and isotacticity, for example.

These may be used alone or in combination of two or more.

Examples of the styrene-based compound include styrene, α-methylstyrene, 3-methylstyrene, 4-methylstyrene, 2,4,6-trimethylstyrene, and 4-tert-butylstyrene, for example. From the viewpoint of availability, atactic homopolystyrene is preferable.

The content of the (c) component per 100 mass% of the resin composition is 15 mass% or more, preferably 20 mass% or more, and more preferably 25 mass% or more from the viewpoint of enhancing the melt flowability of the resin composition, and is 50 mass% or less, preferably 45 mass% or less, and more preferably 40 mass% or less from the viewpoint of enhancing the heat resistance and the fatigue resistance characteristic of the resin composition.

### - Hydrogenated block copolymer (d-1) -

The resin composition of the present embodiment may include a hydrogenated block copolymer produced through hydrogenation of at least a part of a block copolymer containing a polymer block X composed mainly of a styrene-based compound and a polymer block Y composed mainly of a conjugated diene compound (d-1) (hereinafter, simply referred to as the (d-1) component). The (d-1) component imparts an impact strength to the resin composition of the present embodiment.

Examples of the block structure of the (d-1) component include, but are not particularly limited to, structures of X-Y, X-Y-X, X-Y-X-Y, X-Y-X-Y-X, and (X-Y-)₄Si, for example, where "X" represents the polymer block X and "Y" represents the polymer block Y.

### -- Polymer block X --

Examples of the polymer block X composed mainly of a styrene-based compound include, but are not particularly limited to, homopolymer blocks of the styrene-based compound, and copolymer blocks of the styrene-based compound and a conjugated diene compound.

Note that "composed mainly of a styrene-based compound" in the polymer block X means that the content of the polymer portion of the styrene-based compound in the polymer block X is 50 to 100 mass% and preferably 70 to 100 mass%.

Examples of the styrene-based compound composing the polymer block X include, but are not particularly limited to, styrene, α-methylstyrene, 3-methylstyrene, 4-methylstyrene, 2,4,6-trimethylstyrene, and 4-tert-butylstyrene, for example, among which styrene is preferred. These styrene-based compounds may be used alone or in combination of two or more.

### -- Polymer block Y --

Examples of the polymer block Y composed mainly of a conjugated diene compound include, but are not particularly limited to, homopolymer blocks of the conjugated diene compound and copolymer blocks of the conjugated diene compound and a styrene-based compound, for example.

Note that "composed mainly of a conjugated diene compound" in the polymer block Y means that the content of the polymer portion of the conjugated diene compound in the polymer block Y is 50 to 100 mass% and preferably 70 to 100 mass%.

Examples of the conjugated diene compound composing the polymer block Y include, but are not particularly limited to, 1,3-butadiene, 1,3-pentadiene, isoprene, and 2,3-dimethyl-1,3-butadiene, for example, among which 1,3-butadiene and isoprene are preferred. These may be used alone or in combination of two or more.

The bonding form of the conjugated diene compound is not particularly limited and may be arbitrarily selected. The amount of vinyl bonds (the proportion of those incorporated by the 1,2-bonding form and the 3,4-bonding form among the 1,2-bonding form, the 3,4-bonding form, and the 1,4-bonding form in the conjugated diene compound) is preferably 2% or more and 90% or less from the viewpoint of enhancing the heat resistance of the resin composition. For example, when the conjugated diene compound is mainly composed of 1,3-butadiene, the amount of vinyl bonds is preferably 30 to 90%, and when the conjugated diene compound is mainly composed of isoprene, the amount of vinyl bonds is preferably 2 to 80%.

The amount of vinyl bonds can be measured using a nuclear magnetic resonance (NMR) spectrometer.

Examples of the molecular structure of the (d-1) component include, but are not limited to, linear, branched, and radial structures, and combinations thereof, for example.

The distribution of the styrene-based compound in the molecular chain in the polymer block X and the conjugated diene compound in the molecular chain in the polymer block Y is not particularly limited, and examples thereof include random, tapered, partially blocked, and combinations thereof, for example.

When the (d-1) component contains a plurality of polymer blocks X or Y, the polymer blocks X or Y may have the same structure or different structures.

The proportion occupied by the polymer portion of the styrene-based compound in the (d-1) component is preferably 20 mass% or more and more preferably 30 mass% or more from the viewpoint of enhancing dispersibility of the (d-1) component into the (a) component, the (b) component, and the (c) component, and is preferably 95 mass% or less and more preferably 80 mass% or less from the viewpoint of enhancing the impact strength of the resin composition.

Note that the proportion occupied by the polymer portion of the styrene-based compound in the (d-1) component can be measured and calculated using an ultraviolet spectrophotometer or a nuclear magnetic resonance (NMR) spectrometer.

Examples of the method of hydrogenating the block copolymer include, but are not limited to, hydrogenation methods performed under the conditions of reaction temperature from 0 °C to 200 °C and a hydrogen pressure from 0.1 MPa to 15 MPa, for example, using: (1) a carried-type heterogeneous hydrogenation catalyst in which a metal such as Ni, Pt, Pd, or Ru is carried on carbon, silica, alumina, diatomaceous earth, or the like; (2) a so-called Ziegler-type hydrogenation catalyst using an organic acid salt of Ni, Co, Fe, Cr or the like, or a transition metal salt such as an acetylacetone salt and a reducing agent such as organoaluminum; or (3) a homogeneous hydrogenation catalyst such as an organometallic complex of Ti, Ru, Rh, Zr, or the like, for example.

Through the above hydrogenation, fat chain double bonds derived from the polymer portion of the conjugated diene compound which may be contained in the polymer block X and the polymer portion of the conjugated diene compound contained in the polymer block Y are reduced.

The hydrogenation ratio of the (d-1) component is preferably 50% or more, more preferably 90% or more, and particularly preferably 95% or more with respect to the total amount of fat chain double bonds derived from the polymer portion of the conjugated diene compound, from the viewpoint of enhancing the heat resistance and impact strength of the resin composition.

The hydrogenation ratio of the (d-1) component can be measured and calculated using an infrared spectrophotometer or a nuclear magnetic resonance (NMR) spectrometer.

The weight average molecular weight of the (d-1) component is preferably 50,000 or more, more preferably 100,000 or more, and even more preferably 150,000 or more from the viewpoint of enhancing the impact strength of the resin composition, and is preferably 300,000 or less from the viewpoint of enhancing the melt flowability of the resin composition.

Note that the weight average molecular weight can be measured by gel permeation chromatography (mobile phase: chloroform; standard material: polystyrene) according to a conventional and commonly known method.

The content of the (d-1) component per 100 mass% of the resin composition is preferably 0.1 mass% or more, more preferably 0.5 mass% or more, and particularly preferably 1 mass% or more from the viewpoint of enhancing the impact strength of the resin composition, and is preferably 25 mass% or less, more preferably 15 mass% or less, and particularly preferably 5 mass% or less from the viewpoint of enhancing the fatigue resistance characteristic of the resin composition.

### - Rubber-modified polystyrene (d-2) -

The resin composition of the present embodiment may include a rubber-modified polystyrene (d-2) (hereinafter, simply referred to as the (d-2) component). The (d-2) component imparts an impact strength to the resin composition of the present embodiment.

The (d-2) component is a copolymer obtained through polymerization of a styrene-based compound in the presence of a rubbery polymer.

Examples of the styrene-based compound include styrene, α-methylstyrene, 3-methylstyrene, 4-methylstyrene, 2,4,6-trimethylstyrene, and 4-tert-butylstyrene, for example, among which styrene is preferred.

Further, (meth)acrylic esters such as ethyl acrylate and methyl methacrylate; unsaturated nitrile compounds such as acrylonitrile and methacrylonitrile; acid anhydrides such as maleic anhydride; and the like may be used together with the styrene-based compound, for example, as a compound copolymerizable with the styrene-based compound, . The amount of such a compound that is copolymerizable with the styrene-based compound is preferably 20 mass% or less, and more preferably 15 mass% or less with respect to the sum of the amounts of the compound and the styrene-based compound.

Examples of the rubbery polymer include a conjugated diene-based rubber such as polybutadiene and polyisoprene, a copolymer of a conjugated diene compound and a styrene-based compound, and an ethylene-propylene copolymer-based rubber, for example, among which polybutadiene is preferred. A rubbery polymer in which a part of the fat chain double bonds in the rubbery polymer are reduced though hydrogenation may also be used.

The content of the rubbery polymer in the (d-2) component is, but not particularly limited to, preferably 3 mass% or more and 20 mass% or less, and more preferably 5 mass% or more and 15 mass% or less.

The content of the (d-2) component per 100 mass% of the resin composition is preferably 0.1 mass% or more, more preferably 1 mass% or more, and particularly preferably 5 mass% or more from the viewpoint of enhancing the impact strength of the resin composition, and is preferably 25 mass% or less, more preferably 20 mass% or less, and particularly preferably 15 mass% or less from the viewpoint of enhancing the fatigue resistance characteristic of the resin composition.

### - Glass fibers (e) -

The resin composition of the present embodiment includes glass fibers (e) (hereinafter, simply referred to as the (e) component).

The glass composition of the of glass fibers used for the (e) component is not particularly limited, and examples thereof include E glass, S glass, ARG glass, D glass, and C glass, among which E glass is preferred. The diameter of the glass fibers is, but not particularly limited to, preferably 5 µm or more and 25 µm or less, and more preferably 10 µm or more and 15 µm or less.

The glass fibers used as the (e) component are preferably glass fibers which are surface-treated with at least a silane coupling agent, and an ether-based polyurethane and/or an ester-based polyurethane from the viewpoints described below.

The alkoxysilyl group in the silane coupling agent undergoes a condensation reaction with the silanol group present on the surface of a glass fiber to form a siloxane bond. On the other hand, the organic functional group in the silane coupling agent reacts with a functional group such as an amino group derived from a polymerization process or an unreacted hydroxyl group remaining in the polyphenylene ether-based resin (a) and a carboxyl group possessed by the polyphenylene ether-based resin modified with an unsaturated carboxylic acid or acid anhydride thereof (b) to thereby form a covalent bond. In this way, the silane coupling agent enhances the adhesive strength of the interface between the glass fibers and the resin matrix containing the polyphenylene ether-based resin and enhances the mechanical properties such as the tensile strength, the impact strength, and the fatigue resistance characteristic of the resin composition, as well as enhancing the hot water resistance.

Examples of the silane coupling agent that can be used for the (e) component include, but are not particularly limited to, aminosilanes such as 3-aminopropyltrialkoxysilane, N-2-(aminoethyl)-3-aminopropyltrialkoxysilane, and N-2-(aminoethyl)-8-aminooctyltrialkoxysilane; epoxysilanes such as 3-glycidoxypropyltrialkoxysilane, 8-glycidoxyoctyltrialkoxysilane, and 2-(3,4-epoxycyclohexyl)ethyltrialkoxysilane; and isocyanatosilanes such as 3-isocyanatopropyltrialkoxysilane, for example, among which aminosilanes and epoxysilanes are preferred and aminosilanes are particularly preferred. These may be used alone or in combination of two or more.

Further, the surface treatment by an ether-based polyurethane and/or an ester-based polyurethane enhances the dispersibility of the glass fibers into the resin matrix containing the polyphenylene ether-based resin, which improves mechanical properties such as the tensile strength, the impact strength, and the fatigue resistance characteristic of the resin composition. Ether-based polyurethanes are more preferred from the viewpoint of enhancing the hot water resistance of the resin composition because they have almost no water absorption property and are less likely to undergo hydrolysis.

Examples of the ether-based polyurethane which can be used for the (e) component include, but are not particularly limited to, ether-based polyurethanes which are produced from, as main components, one or more selected from polyisocyanates such as hexamethylene diisocyanate, toluene diisocyanate, xylylene diisocyanate, diphenylmethane diisocyanate, isophorone diisocyanate, and dicyclohexylmethane diisocyanate; and one or more selected from polyether polyols having a repeating unit structure represented by the following formula (2) and/or a repeating unit structure represented by the following formula (3), for example. 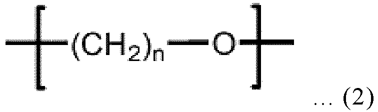 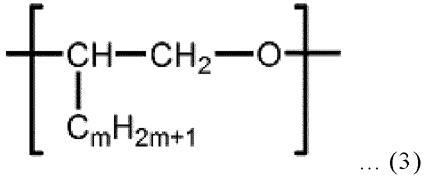 [where m is 1 or 2, and n is an integer from 2 to 5.]

Examples of the ester-based polyurethane which can be used in the (e) component include, but are not particularly limited to, ester-based polyurethanes which are produced from, as main components, one or more selected from polyisocyanates such as hexamethylene diisocyanate, toluene diisocyanate, xylylene diisocyanate, diphenylmethane diisocyanate, isophorone diisocyanate, and dicyclohexylmethane diisocyanate; and one or more selected from polyester polyols obtained through polycondensation of one or more selected from dicarboxylic acids such as adipic acid, phthalic acid, isophthalic acid, and terephthalic acid, and one or more polyols selected from ethylene glycol, 1,3-propanediol, diethylene glycol, triethylene glycol, dipropylene glycol, and tripropylene glycol, for example.

Other than the silane coupling agent, and the ether-based polyurethane and/or the ester-based polyurethane described above, the (e) component may include, as a surface treatment agent, a styrene-maleic anhydride copolymer, an olefin-maleic anhydride copolymer, an antioxidant, a nonionic surfactant, an ionic surfactant, and a plasticizer, and the like, if necessary.

The content of the (e) component per 100 mass% of the resin composition is 5 mass% or more, preferably 7 mass% or more, and more preferably 10 mass% or more from the viewpoint of enhancing the heat resistance, the tensile strength, and the fatigue resistance characteristics of the resin composition, and is 35 mass% or less, preferably 30 mass% or less, and more preferably 28 mass% or less from the viewpoint of enhancing the melt flowability and the hot water resistance of the resin composition.

### - Compound (f) -

The resin composition of the present embodiment includes one or more compounds (f) selected from the group consisting of magnesium oxide, magnesium hydroxide, magnesium carbonate, magnesium silicate, aluminum hydroxide, aluminum silicate, and hydrotalcite (hereinafter, simply referred to as the (f) component). The (f) component further improves the hot water resistance of the resin composition.

Note that examples of the hydrotalcite include, but are not particularly limited to, hydrotalcite compounds represented by the following formula (4) and calcined products thereof. 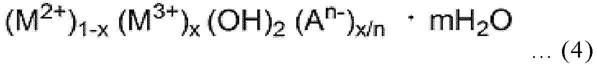 [In the formula, M²⁺ represents a divalent metal ion such as Mg²⁺ and Zn²⁺, and M³⁺ represents a trivalent metal ion such as Al³⁺ and Fe³⁺. Aⁿ⁻ represents an n-valent anion such as Cl⁻, CO₃²⁻, and SO₄²⁻. x satisfies 0 <x < 0.5, m satisfies m ≥ 0, and n satisfies 1 ≤ n ≤ 4.]

The content of the (f) component per 100 mass% of the resin composition is preferably 0.01 mass% or more, more preferably 0.05 mass% or more, and particularly preferably 0.1 mass% or more from the viewpoint of enhancing the thermal water resistance of the resin composition, and is preferably 1 mass% or less, more preferably 0.5 mass% or less, and particularly preferably 0.2 mass% or less from the viewpoint of enhancing the fatigue resistance characteristic of the resin composition.

### - Compound (g) -

The resin composition of the present embodiment may include one or more compounds (g) selected from the group consisting of fatty acids, fatty acid esters, metal salts of fatty acids, and fatty acid amids (hereinafter, simply referred to as the (g) component). The (g) component improves the mold releasability upon molding of the resin composition.

The (g) component is selected from fatty acids such as palmitic acid, stearic acid, behenic acid, and erucic acid; fatty acid esters such as glycerin monostearate and glycerin distearate; metal salts of fatty acids such as magnesium palmitate, calcium palmitate, zinc palmitate, magnesium stearate, calcium stearate, and zinc stearate; fatty acid amides such as palmitic acid amide, stearic acid amide, behenic acid amide, erucic acid amide, methylene-bisstearic acid amide, and ethylene bisstearic acid amide. These may be used alone or in combination of two or more.

The content of the (g) component per 100 mass% of the resin composition is preferably 1 mass ppm or more, more preferably 10 mass ppm or more, and particularly preferably 100 mass ppm or more from the viewpoint of enhancing the mold releasability upon molding of the resin composition, and is preferably 10000 mass ppm or less, more preferably 3000 mass ppm or less, and particularly preferably 1000 mass ppm or less from the viewpoint of enhancing the hot water resistance of the resin composition.

The (g) component may be added at the stage during which the resin composition is being formed (during melt-kneading), or may be spread on the surface of the resin composition, which is typically in the form of pellets, at the stage after the resin composition has been formed (stage after melt-kneading).

### - Polyethylene (h) -

The resin composition of the present embodiment may include a polyethylene (h) (hereinafter, simply referred to as the (h) component). The (h) component improves the mold releasability upon molding of the resin composition.

Examples of the (h) component are selected from, but not limited to, high density polyethylene (density: 940 to 970 kg/m³), low density polyethylene (density: 910 to 940 kg/m³), and linear low density polyethylene (density: 900 to 940 kg/m³) These may be used alone or in combination of two or more.

The melt flowability of the (h) component which is measured in accordance with ISO 1133 at 190 °C under a load of 2.16 kg is preferably 10 g/10 min or more and more preferably 15 g/10 min or more from the viewpoint of enhancing the mold releasability upon molding of the resin composition , and is preferably 65 g/10 min or less and more preferably 60 g/10 min or less, from the viewpoint of enhancing the heat resistance of the resin composition.

The content of the (h) component is preferably 0.1 mass% or more, more preferably 0.5 mass% or more, particularly preferably 1 mass% or more from the viewpoint of enhancing the mold releasability upon molding of the resin composition, and is preferably 5 mass% or less, more preferably 3 mass% or less, and particularly preferably 2 mass% or less from the viewpoint of enhancing the heat resistance of the resin composition, with respect to 100 mass% of the resin composition.

### - Other components -

In addition to the components (a) to (c), the (d-1) component, the (d-2) component, and the components (e) to (h) described above, the resin composition of the present embodiment may contain other components as necessary within a range not impairing the tensile strength, the impact strength, the fatigue resistance characteristic, the hot water resistance, and the like of the resin composition of the present embodiment.

Examples of the other components include, but are not limited to, a thermoplastic resin other than the (a) to (c) components, the (d-1) component, the (d-2) component, and the (h) component; an antioxidant; an UVA; a HAL; a metal deactivator; a flame retardant; a plasticizer; an inorganic filler other than the (e) component; an organic filler; and a colorant.

Examples of the thermoplastic resin other than the (a) to (c) components, the (d-1) component, the (d-2) component, and the (h) component included in the resin composition of the present embodiment include polyolefin resins such as polypropylene and polybutene, and polyolefin-based copolymers such as ethylene-propylene copolymers, ethylene-buten copolymers, ethylene-octene copolymers, ethylene-ethylacrylate copolymers, and ethylene-ethylmethacrylate copolymers. The sum of the content of the thermoplastic resin other than the (a) to (c) components, the (d-1) component, the (d-2) component, and the (h) component is preferably 5 mass% or less, more preferably 3 mass% or less, and particularly preferably 2 mass% or less per 100 mass% of the resin composition, from the viewpoint of enhancing the fatigue resistance characteristic and the hot water resistance of the resin composition.

The resin composition of the present embodiment may contain, as a flame retardant, one or two or more of monophosphate esters such as triphenyl phosphate, tricresyl phosphate, and trixylenyl phosphate; condensed phosphate esters such as resorcinol bis(diphenyl phosphate), resorcinol bis(dixylenyl phosphate), bisphenol A bis(diphenyl phosphate), and the like, and the content thereof is preferably 13 mass% or less, more preferably 8 mass% or less, and particularly preferably 3 mass% or less per 100 mass% of the resin composition, from the viewpoint of enhancing the hot water resistance of the resin composition.

The resin composition of the present embodiment may contain, as an inorganic filler, one or two or more of glass fibers other than the (e) component, glass flakes, talc, mica, warastonite, and the like, and the content thereof is preferably 15 mass% or less, more preferably 10 mass% or less, and particularly preferably 5 mass% or less per 100 mass% of the resin composition, from the viewpoint of enhancing the hot water resistance of the resin composition.

### (Method of producing resin composition)

The resin composition of the present embodiment can be produced by melt-kneading the polyphenylene ether-based resin (a), the homopolystyrene (c), the glass fiber (e), the one or more compounds (f) selected from the group consisting of magnesium oxide, magnesium hydroxide, magnesium carbonate, magnesium silicate, aluminum hydroxide, aluminum silicate, and hydrotalcite, and optionally the other components, as described above.

Examples of an apparatus suitably used for melt-kneading the above-mentioned components include, a single screw extruder or a multi screw extruder such as a twin screw extruder, a roll, a kneader, and a Banbury mixer, for example. In the present embodiment, among others, a multi screw extruder is particularly preferred.

More specifically, preferred is a multi screw extruder provided with, from upstream to downstream in the direction of flow of the raw materials, a first raw material feed port, a first vacuum vent, second and subsequent raw material feed ports, and a second vacuum vent. Further, a multi screw extruder is preferably provided with respective kneading sections between the first raw material feed port and the first vacuum vent, and between a supply port after the second raw material feed port and the second vacuum vent.

The amount of each component to be added in the production method of a resin composition of the present embodiment is the above-described content of each component in the resin composition of the present embodiment.

The melt-kneading temperature upon melt-kneading the components may be, without limitation, typically 200 to 350 °C, and the screw rotation speed may be, without limitation, typically 100 to 1200 rpm, and the discharge amount may be, without limitation, typically 10 to 1200 kg/hour, and the degree of vacuum may be, without limitation, typically -0.06 to -0.099 MPa.

### (Molded article, mechanical component, and housing)

By molding the above-described resin compositions according to the present embodiment, a molded article made from the resin compositions can be obtained.

The method of molding the resin compositions include, but are not particularly limited, injection molding, metal in-mold molding, outsert molding, extrusion molding, sheet molding, film molding, hot press molding, rotational molding, and lamination molding, for example.

### - Amount of eluted butadiene monomer from molded body to hot water -

In the meantime, the German standard KTW for parts in contact with drinking water regulates the upper limit of the concentration of butadiene monomer eluted into hot water when the final product is immersed in the hot water as one of the requirements of the standard.

From the viewpoint of satisfying the requirements of KTW, when a molded article (surface area: S dm²) of the resin composition of the present embodiment is immersed in hot water (volume: V dm³) kept at a temperature of 85 ± 2 °C and change of the hot water and the immersion are repeated, the amount of the butadiene monomer eluted into hot water used for the seventh immersion is preferably less than 0.13 µg/L (provided that the S/V ratio is 5.0 dm⁻¹).

More specifically, a molded article (surface area: S dm²) produced through molding of the resin composition was subjected to an elution test of butadiene monomer from the molded article to hot water according to the following procedure.

### (0) Preliminary washing

After a molded article was washed with tap water for 1 hour, it was immersed in hot water kept at a temperature of 85 ± 2 °C for 24 hours and was then further washed with tap water for 1 hour.

### (1) Immersion test

The molded article subjected to the preliminary washing in the above (0) was immersed in hot water (volume: V dm³) kept at a temperature of 85 ± 2 °C for 24 hours (first immersion). Hot water was changed and the molded article was again immersed in fresh hot water (volume: V dm³) kept at a temperature of 85 ± 2 °C for 24 hours (second immersion). Hot water was changed and the molded article was again immersed in fresh hot water (volume: V dm³) kept at a temperature of 85 ± 2 °C for 24 hours (third immersion). Hot water was changed and the molded article was again immersed in fresh hot water (volume: V dm³) kept at a temperature of 85 ± 2 °C for 72 hours (fourth immersion). In the same way, the change of hot water and 24-hour immersion in hot water were repeated three more times (fifth to seventh immersion).

### (2) Measurement of amount of eluted butadiene monomer

The concentration of butadiene monomer in the hot water used for the seventh immersion in (1) above was measured using a purge-trap GC/MS, and used as the amount of the eluted butadiene monomer (unit: µg/L).

The fatty chain double bonds which may be contained in the (d-1) component and the fatty chain double bonds contained in the (d-2) component thermally decompose under a high temperature environment. In particular, when the (d-1) component or the (d-2) component have a polybutadiene moiety, the polybutadiene moiety is thermally decomposed at the stage during which the resin composition is being formed (stage of melt-kneading), and the resultant resin composition may contain a butadiene monomer.

Therefore, from the viewpoint of controlling the amount of the eluted butadiene monomer from the molded article into the hot water to fall within any of the above ranges, the content of polybutadiene moieties derived from the (d-1) component and the (d-2) component is preferably 2.0 mass% or less, more preferably 1.0 mass% or less, and even more preferably 0.50 mass% or less, with respect to 100 mass% of the resin composition.

The molded article made from the resin compositions of the present embodiment is suitably used as machine components and housings related to plumbing of water such as pump housings, valves, pipe blocks, flanges, water meters, heat exchangers, water purifiers, water softeners, and shower heads, for example. The molded article is particularly suited to a mechanical component and housing related to plumbing of water, which is used in contact with drinking water.

### EXAMPLES

Hereinafter, the present disclosure will be described with reference to specific examples and comparative examples. However, the present disclosure is not so limited.

The following provides a description of the raw materials used in resin compositions of Examples and Comparative Examples described later.

### - Polyphenylene ether-based resin (a) -

(a-1) Poly(2,6-dimethyl-1,4-phenylene ether) (weight average molecular weight: 52,000)
(a-2) Poly(2,6-dimethyl-1,4-phenylene ether) (weight average molecular weight: 74,000)

### - Polyphenylene ether-based resin modified with unsaturated carboxylic acid or acid anhydride thereof (b) -

(b-1) Modified polyphenylene ether produced through melt-kneading of 100 parts by mass of poly(2,6-dimethyl-1,4-phenylene ether) (weight average molecular weight: 52,000) and 2.5 parts by mass of maleic anhydride at 320 °C under a nitrogen atmosphere. The modification ratio by maleic anhydride was 0.6 mass%.
(b-2) Modified polyphenylene ether produced through melt-kneading of 100 parts by mass of poly(2,6-dimethyl-1,4-phenylene ether) (weight average molecular weight: 52,000) and 0.8 parts by mass of maleic anhydride at 320 °C under a nitrogen atmosphere. The modification ratio by maleic anhydride was 0.2 mass%.
(b-3) Modified polyphenylene ether produced through melt-kneading of 100 parts by mass of poly(2,6-dimethyl-1,4-phenylene ether) (weight average molecular weight: 52,000), 2.5 parts by mass of maleic anhydride, and 0.5 parts by weight of dicumyl peroxide at 320 °C under a nitrogen atmosphere. The modification ratio by maleic anhydride was 1.2 mass%.

### - Homopolystyrene (c) -

(c-1) Atactic homopolystyrene (trade name: Polystyrene 685, manufactured by PS Japan Corporation).

### - Hydrogenated block copolymer (d-1) -

(d-1-1) "Polystyrene-hydrogenated polybutadiene-polystyrene" triblock copolymer (amount of vinyl bonds: 38%, styrene content: 33 mass%, weight average molecular weight: 250,000, and hydrogenation ratio to polybutadiene portion: 99.8%)

(d-1-2) "Polystyrene-hydrogenated polybutadiene-polystyrene-hydrogenated polybutadiene" tetrablock copolymer (amount of vinyl bonds: 38%, styrene content: 60 mass%, weight average molecular weight: 110,000, and hydrogenation ratio to polybutadiene portion: 99.8%)

### - Rubber-modified polystyrene (d-2) -

(d-2) Rubber-modified polystyrene containing 8 mass% of polybutadiene rubber

### - Surface-treated glass fibers (e) -

(e-1) Glass fibers (average diameter: 13 µm) surface-treated with 3-aminopropyltriethoxysilane and an ether-based polyurethane produced from, as main components, isophorone diisocyanate and a polyether polyol having ethylene oxide in a repeating unit structure
(e-2) Glass fibers (average diameter: 10 µm) surface-treated with 3-aminopropyltriethoxysilane and an ether-based polyurethane produced from, as main components, dicyclohexylmethane diisocyanate and a polyether polyol having propylene oxide in a repeating unit structure (e-3) Glass fibers (average diameter: 13 µm) surface-treated with 3-aminopropyltriethoxysilane and an ester-based polyurethane produced from, as main components, isophorone diisocyanate and a condensation reaction product of adipic acid and ethylene glycol
(e-4) Glass fibers (average diameter: 13 µm) surface-treated with 3-aminopropyltriethoxysilane

### - Compound (f) -

(f-1) Magnesium oxide (trade name: Kyowamag 150, manufactured by Kyowa Chemical Industry Co., Ltd.)
(f-2) Hydrotalcite Mg_{4.5}Al₂(OH)₁₃(CO₃)·3.5H₂O (trade name: DHT-4C, manufactured by Kyowa Chemical Industry Co., Ltd.)

### - Compound (g) -

(g-1) Ethylene bis stearic acid amide
(g-2) Magnesium stearate

### -Compound (h) -

(h-1) Low density polyethylene (density: 919 kg/m³, melt flow rate (190 °C, 2.16 kg): 22 g/10 min)

### - Other components -

(x-1) Antioxidant (trade name: Irganox 565, manufactured by BASF)
(x-2) Antioxidant (trade name: Irgafos 168, manufactured by BASF)
(x-3) Maleic anhydride

The physical properties of the resin compositions of the below-described Examples and Comparative Examples were measured with the following methods (1) to (8).

### (1) Melt flowability

After pellets of the resin composition of each of Examples and Comparative Examples to be described later were subjected to preliminary drying at 80 °C for 2 hours, the melt mass flow rate (MFR) (units: g/10 min) of the pellets was measured in accordance with JIS K7210-1 under the conditions of a temperature of 250 °C and a load of 10 kg.

The evaluation criteria were such that a higher measured value indicated a better melt flowability.

### (2) Heat resistance

After pellets of the resin composition of each of the Examples and Comparative Examples to be described later were subjected to preliminary drying at 80 °C for 2 hours, the pellets were fed to a screw inline type injection molding machine (model: IS-100GN, manufactured by Toshiba Machine Co., Ltd.) which was set at 220 °C to 320 °C, under the condition of a mold temperature of 90 °C, to mold test pieces of JIS K7139 Type A in accordance with JIS K7152-1. Each test piece was cut into a test piece for measurement of deflection temperature under load.

The deflection temperature (unit: °C) of the test piece for measurement of deflection temperature under load was measured under the condition of a load of 1.81 MPa in accordance with JIS K 7191-1.

The evaluation criteria were such that a higher measured value indicated a better heat resistance.

### (3) Impact strength

Each test piece of JIS K7139 Type A molded in (2) was cut into a test piece used for measurement of Charpy impact strength.

For the test piece for Charpy impact strength measurement, the Charpy impact strength (unit: kJ/m²) of the test piece was measured in accordance with JIS K7111-1/1eA under the condition of a temperature of 23 °C.

The evaluation criteria were such that a higher measured value indicated a better impact strength.

### (4) Tensile strength

Using a test piece of JIS K7139 Type A molded in (2), the tensile strength of the test piece (unit: MPa) was measured in accordance with JIS K7161-1 under the conditions of a temperature of 23 °C and a tensile rate of 5 mm/minute.

The evaluation criteria were such that a higher measured value indicated a better tensile strength.

### (5) Fatigue resistance characteristic

After pellets of the resin composition of each of the Examples and Comparative Examples to be described later were subjected to preliminary drying at 80 °C for 2 hours, the pellets were fed to a screw inline type injection molding machine (model: IS-100GN, manufactured by Toshiba Machine Co., Ltd.) which was set at 220 °C to 320 °C, under the condition of a mold temperature of 90 °C, to mold a JIS K7119 **III** Type test piece.

This JIS K7119 **III** type test piece was subjected to a plane bending fatigue test under the conditions of a temperature of 23 °C, a repeating stress of 40 MPa, and a frequency of 30 Hz in accordance with JIS K7119 using a repetitive vibration fatigue tester (model: B-70, manufactured by Toyo Seiki Seisaku-sho, Ltd.), and the number of repetitions until the test piece was broken was recorded and evaluated according to the following evaluation criteria.

### (Evaluation criteria)

A: the number of repetitions until the test piece was broken was 5.00 × 10⁶ or more
B: the number of repetitions until the test piece was broken was 3.00 × 10⁶ or more and less than 5.00 × 10⁶
C: the number of repetitions until the test piece was broken was 1.00 × 10⁶ or more and less than 3.00 × 10⁶
D: the number of repetitions until the test piece was broken was less than 1.00 × 10⁶

### (6) Hot water resistance

The JIS K7139 type A test piece molded in (2) and the Charpy impact strength test piece prepared in (3) were subjected to a pressure cooker test (PCT) for 350 hours under the conditions of a temperature of 130 °C, a humidity of 100% RH, and a water vapor pressure of 0.17 MPa·G.

The impact strength and the tensile strength of the test pieces after the PCT were measured in the same manner as in (3) and (4), and the measured values of the impact strength and the tensile strength were divided by the impact strength and tensile strength before the PCT to be determined as the retention ratios of the impact strength and tensile strength, respectively.

The evaluation criteria were such that a higher retention ratio indicated a better hot water resistance.

### (7) Amount of eluted butadiene monomer from molded article into hot water

After pellets of the resin composition of each of the Examples and Comparative Examples to be described later were subjected to preliminary drying at 80 °C for 2 hours, the pellets were fed to a screw inline type injection molding machine (model: IS-100GN, manufactured by Toshiba Machine Co., Ltd.) which was set at 220 °C to 320 °C, under the condition of a mold temperature of 90 °C, to mold flat plates (50 mm × 90 mm × 2 mm).

These four flat plates (total surface area S: 3.82 dm²) were subjected to an elution test of butadiene monomer from the molded article to hot water according to the following procedure.

### (0) Preliminary washing

After the flat plates were washed with tap water for 1 hour, it was immersed in hot water kept at a temperature of 85 ± 2 °C for 24 hours and was then further washed with tap water for 1 hour.

### (1) Immersion test

The flat plates subjected to the preliminary washing in the above (0) were immersed in hot water (volume V: 0.76 dm³) kept at a temperature of 85 ± 2 °C for 24 hours (first immersion). Hot water was changed and the flat plate were again immersed in fresh hot water (volume V: 0.76 dm³) kept at a temperature of 85 ± 2 °C for 24 hours (second immersion). Hot water was changed and the flat plate were again immersed in fresh hot water (volume V: 0.76 dm³) kept at a temperature of 85 ± 2 °C for 24 hours (third immersion). Hot water was changed and the flat plate were again immersed in fresh hot water (volume V: 0.76 dm³) kept at a temperature of 85 ± 2 °C for 72 hours (fourth immersion). In the same way, the change of hot water and 24-hour immersion in hot water were repeated three more times (fifth to seventh immersion).

### (2) Measurement of amount of eluted butadiene monomer

The concentration of butadiene monomer in the hot water used for the seventh immersion in (1) above was measured using a purge-trap GC/MS, and used as the amount of the eluted butadiene monomer (unit: µg/L).
(Purge-trap apparatus) model: JHS-100, manufactured by Japan Analytical Industry
(Purge gas) helium gas
(Collecting agent) trade name: TENAX, manufactured by GL Sciences Inc.
(GC/MS apparatus) model: GC-17A/QP-5050A, manufactured by Shimadzu Corporation
(Column) trade name: DB-1, manufactured by Agilent Technology
(Carrier gas) helium gas
(Internal standard substance) toluene-ds

### (8) Mold releasability

After pellets of the resin composition of each of the Examples and Comparative Examples to be described later were subjected to preliminary drying at 80 °C for 2 hours, the pellets were fed to a screw inline type injection molding machine (model: IS-100GN, manufactured by Toshiba Machine Co., Ltd.) which was set at 220 °C to 320 °C, under the condition of a mold temperature of 90 °C, to continuously mold 300 shots of flat plates (50 mm × 90 mm × 2 mm). Thereafter, the degree of sticking of the molded pieces to the mold was evaluated according to the following evaluation criteria.

### (Evaluation criteria)

A: No sticking of the molded pieces to the mold was observed
B: Almost no sticking of the molded piece to the mold was observed

### (Examples 1 to 36 and Comparative Examples 1 to 12) (Examples 1-6, 9-12 and 16-19 are reference examples)

As a melt kneader, a twin screw extruder (trade name: ZSK-25, manufactured by COPERION) was used.

The extruder was provided with a first raw material feed port on the upstream side in the direction of flow of the raw materials, a first vacuum vent downstream to the first raw material feed port, a second raw material feed port downstream to the first vacuum vent, and a second vacuum vent downstream to the second raw material feed port. Further, respective kneading sections were provided between the first raw material feed port and the first vacuum vent and between the second and subsequent raw material feed ports and the second vacuum vent. At the second raw material feed port, raw materials were fed from the side opening using the forced side feeder.

In the twin screw extruder configured as described above, raw materials in the compositions were fed from the raw material supply positions as summarized in Table 1 and melt-kneaded under the kneading conditions of a melt kneading temperature from 250 to 320 °C, a screw rotation speed of 160 rpm, a discharge amount of 10 kg/hour, and a degree of vacuum of -0.09 MPa to produce each pelletized resin composition. As for the components labeled as "External lubrication" in the raw material supply position, the component was blended and spread on the surfaces of pelletized resin composition after production of the pellets.

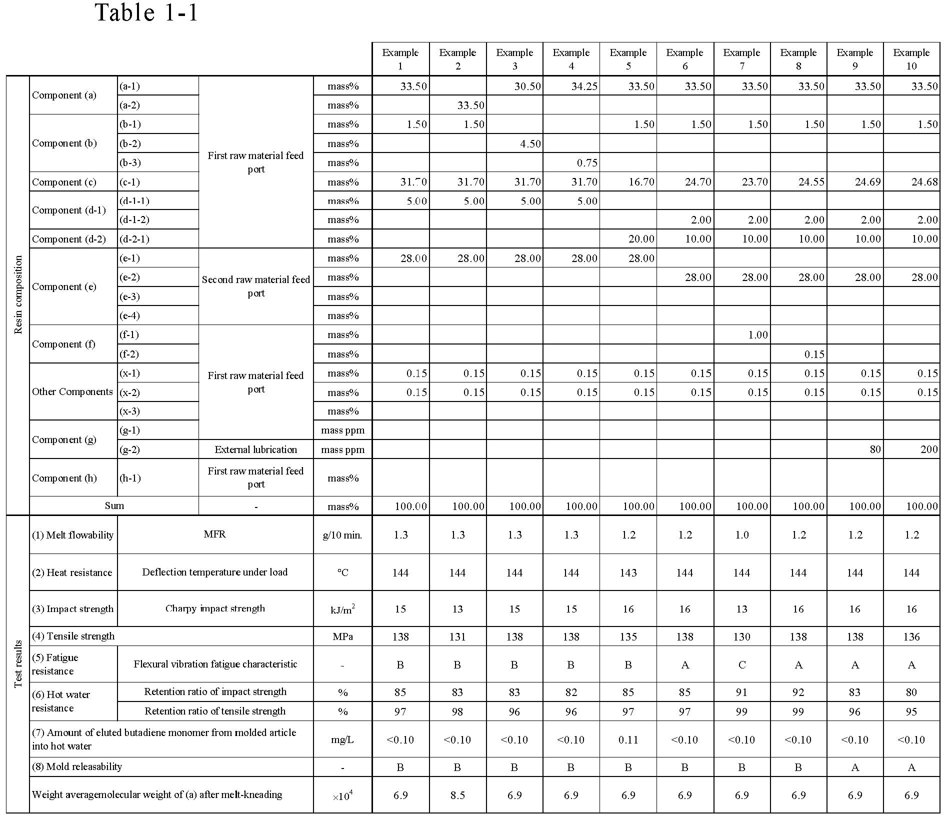

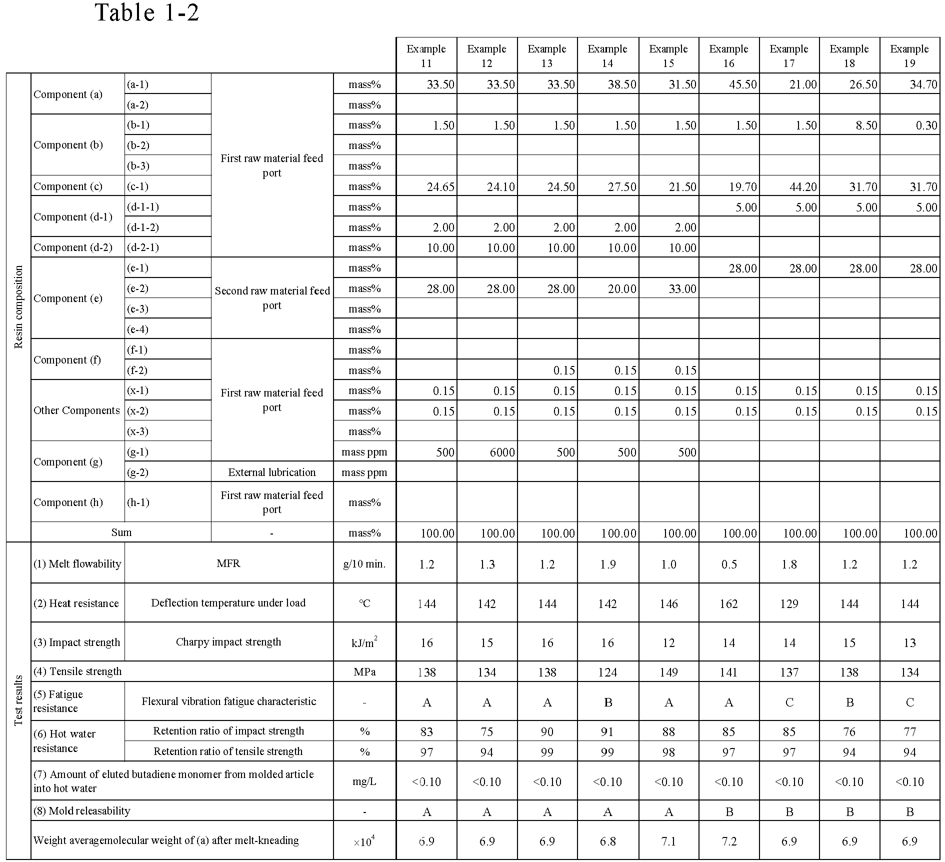

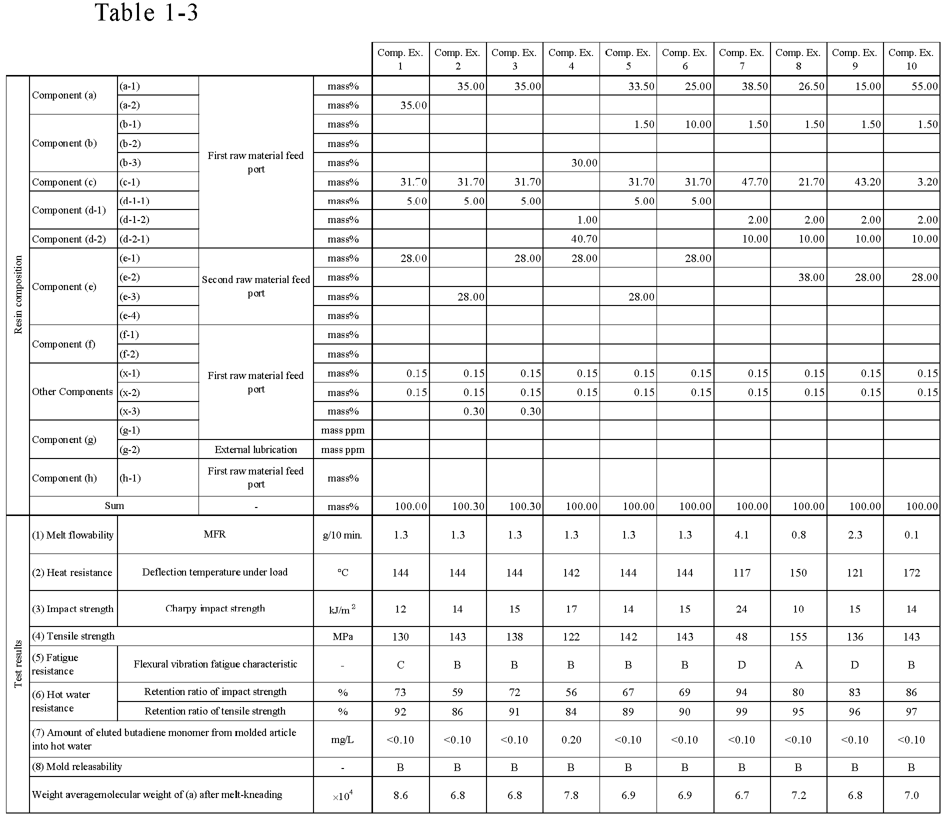

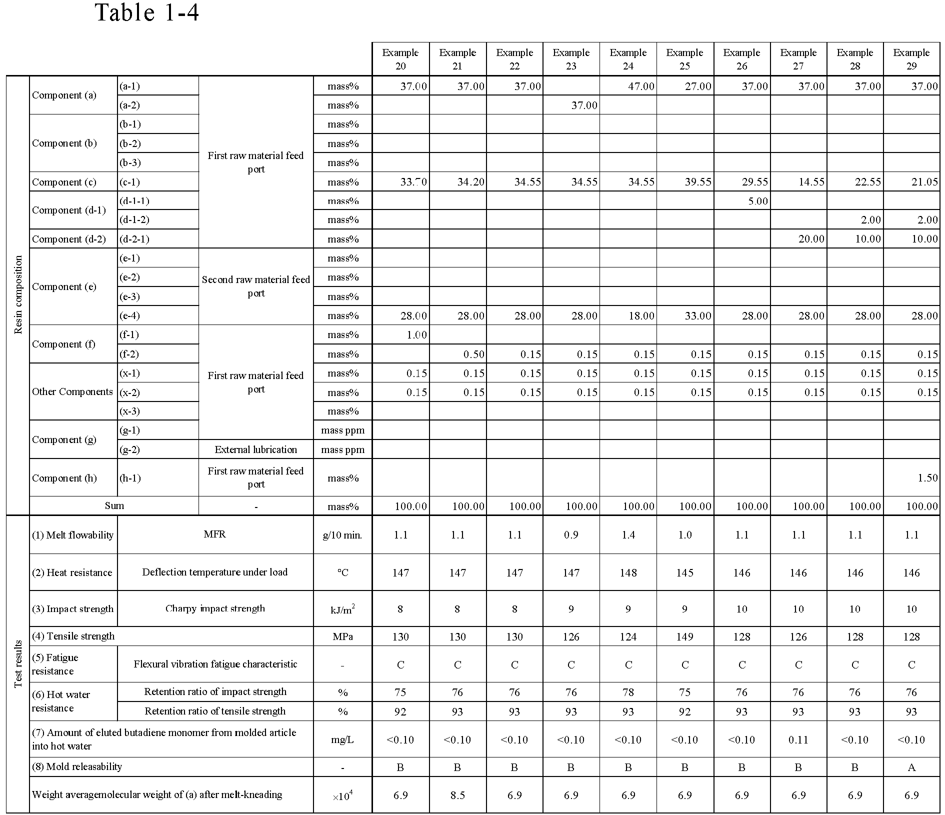

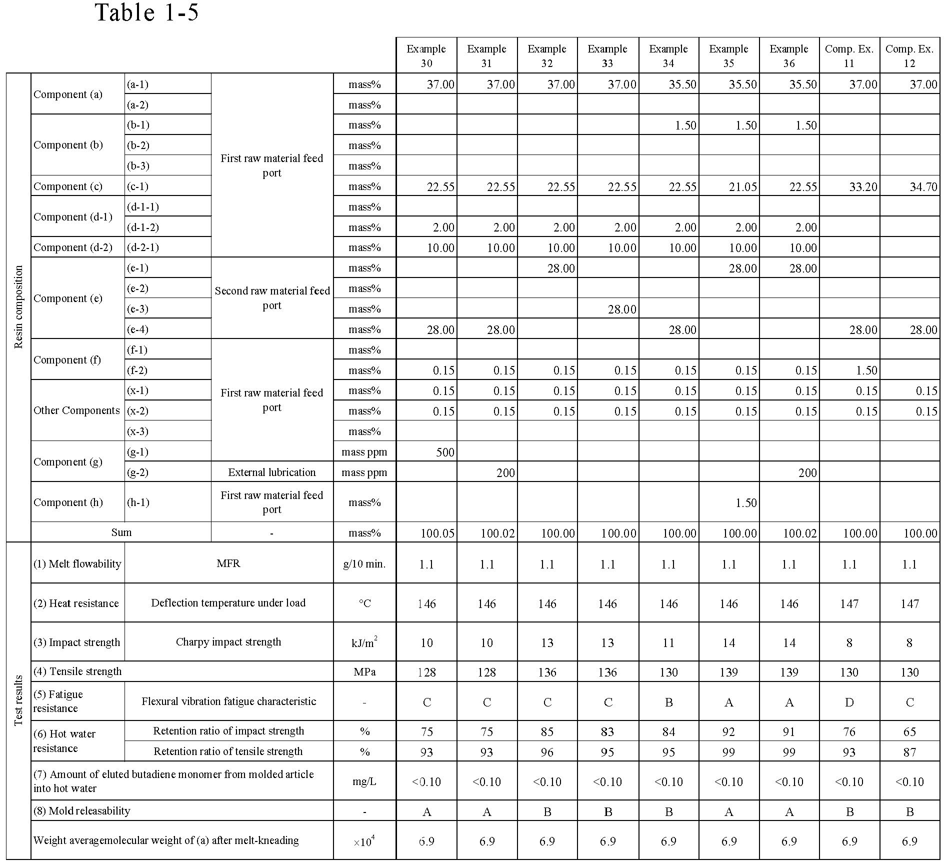

### INDUSTRIAL APPLICABILITY

The resin compositions of the present disclosure are resin compositions excellent in mechanical properties such as the tensile strength, the impact strength, and the fatigue resistance characteristic, and can retain those mechanical properties at high levels over a long period of time even under a hot water environment, and a molded articles thereof can be suitably used as a mechanical component, a housing, and the like related to plumbing of water.

The molded article made from the resin compositions of the present embodiment is suitably used as machine components and housings related to plumbing of water such as pump housings, valves, pipe blocks, flanges, water meters, heat exchangers, water purifiers, water softeners, and shower heads, for example. The molded article is particularly suited to a mechanical component and housing related to plumbing of water, which is used in contact with drinking water.

## Claims

1. A resin composition comprising:
20 to 50 mass% of a polyphenylene ether-based resin (a);
15 to 50 mass% of a homopolystyrene (c);
5 to 35 mass% of glass fibers (e); and
0.01 to 1 mass% of one or more compounds (f) selected from the group consisting of magnesium oxide, magnesium hydroxide, magnesium carbonate, magnesium silicate, aluminum hydroxide, aluminum silicate, and hydrotalcite.

2. The resin composition according to claim 1, further comprising 1 to 25 mass% of one or more selected from the group consisting of a hydrogenated block copolymer obtained through hydrogenation of at least a part of a block copolymer containing a polymer block X composed mainly of a styrene-based compound and a polymer block Y composed mainly of a conjugated diene compound (d-1) and a rubber-modified polystyrene (d-2).

3. The resin composition according to claim 1 or 2, further comprising 0.1 to 5 mass% of a polyethylene (h).

4. The resin composition according to any one of claims 1 to 3, further comprising 1 to 10000 mass ppm of one or more compounds (g) selected from the group consisting of fatty acids, fatty acid esters, metal salts of fatty acids, and fatty acid amids.

5. The resin composition according to any one of claims 1 to 4, wherein the glass fibers (e) are glass fibers which are surface-treated with at least a silane coupling agent, and an ether-based polyurethane and/or an ester-based polyurethane.

6. The resin composition according to any one of claims 1 to 5, further comprising 0.1 to 9 mass% of a polyphenylene ether-based resin modified with an unsaturated carboxylic acid or acid anhydride thereof (b).

7. The resin composition according to any one of claims 1 to 6, wherein the compound (f) is hydrotalcite.

8. The resin composition according to any one of claims 1 to 6, comprising one or two or more flame retardants selected from the group consisting of monophosphate esters and condensed phosphate esters.

9. The resin composition according to any one of claims 1 to 6, comprising a rubber-modified polystyrene (d-2).

10. A molded article comprising the resin composition according to any one of claims 1 to 9.

11. The molded article according to claim 10, wherein, when the molded article (surface area: S dm²) is immersed in hot water (volume: V dm³) kept at a temperature of 85 ± 2 °C and change of the hot water and the immersion are repeated, an amount of a butadiene monomer eluted into the hot water used for a seventh immersion is less than 0.13 µg/L (provided that the S/V ratio is 5.0 dm⁻¹).

12. A mechanical component and housing comprising the molded article according to claim 10 or 11.

13. Use of the mechanical component and housing according to claim 12 in contact with drinking water.

14. A method of producing a resin composition according to claim 1, the method comprising melt-kneading
20 to 50 mass% of the polyphenylene ether-based resin (a);
15 to 50 mass% of the homopolystyrene (c);
5 to 35 mass% of the glass fibers (e); and
0.01 to 1 mass% of the one or more compounds (f) selected from the group consisting of magnesium oxide, magnesium hydroxide, magnesium carbonate, magnesium silicate, aluminum hydroxide, aluminum silicate, and hydrotalcite.

## Patentansprüche

1. Harzzusammensetzung, umfassend:
20 bis 50 Massen-% eines Polyphenylenether-basierten Harzes (a);
15 bis 50 Massen-% eines Homopolystyrols (c);
5 bis 35 Massen-% Glasfasern (e); und
0,01 bis 1 Massen-% einer oder mehrerer Verbindungen (f), ausgewählt aus der Gruppe bestehend aus Magnesiumoxid, Magnesiumhydroxid, Magnesiumcarbonat, Magnesiumsilicat, Aluminiumhydroxid, Aluminiumsilicat und Hydrotalcit.

2. Harzzusammensetzung nach Anspruch 1, weiterhin umfassend 1 bis 25 Massen-% eines oder mehrerer, ausgewählt aus der Gruppe bestehend aus einem hydrierten Blockcopolymer, welches durch Hydrierung mindestens eines Teils eines Blockcopolymers, das einen Polymerblock X, der hauptsächlich aus einer Styrol-basierten Verbindung aufgebaut ist, und einen Polymerblock Y, der hauptsächlich aus einer konjugierten Dienverbindung aufgebaut ist (d-1), enthält, und einem kautschukmodifizierten Polystyrol (d-2).

3. Harzzusammensetzung nach Anspruch 1 oder 2, weiterhin umfassend 0,1 bis 5 Massen-% eines Polyethylens (h).

4. Harzzusammensetzung nach einem der Ansprüche 1 bis 3, weiterhin umfassend 1 bis 10000 Massen-ppm einer oder mehrerer Verbindungen (g), ausgewählt aus der Gruppe bestehend aus Fettsäuren, Fettsäureestern, Metallsalzen von Fettsäuren und Fettsäureamiden.

5. Harzzusammensetzung nach einem der Ansprüche 1 bis 4, wobei die Glasfasern (e) Glasfasern sind, die mit mindestens einem Silankupplungsmittel sowie einem etherbasierten Polyurethan und/oder einem esterbasierten Polyurethan oberflächenbehandelt sind.

6. Harzzusammensetzung nach einem der Ansprüche 1 bis 5, weiterhin umfassend 0,1 bis 9 Massen-% eines Polyphenylenether-basierten Harzes, welches mit einer ungesättigten Carbonsäure oder einem Säureanhydrid davon (b) modifiziert ist.

7. Harzzusammensetzung nach einem der Ansprüche 1 bis 6, wobei die Verbindung (f) Hydrotalcit ist.

8. Harzzusammensetzung nach einem der Ansprüche 1 bis 6, umfassend ein oder zwei oder mehrere Flammschutzmittel, ausgewählt aus der Gruppe bestehend aus Monophosphatestern und kondensierten Phosphatestern.

9. Harzzusammensetzung nach einem der Ansprüche 1 bis 6, umfassend ein kautschukmodifiziertes Polystyrol (d-2).

10. Formgegenstand, umfassend die Harzzusammensetzung nach einem der Ansprüche 1 bis 9.

11. Formgegenstand nach Anspruch 10, wobei, wenn der Formgegenstand (Oberflächenbereich: S dm²) in heißes Wasser (Volumen: V dm³) bei einer Temperatur von 85 ± 2°C eingetaucht wird und ein Wechsel des heißen Wassers und des Eintauchens wiederholt durchgeführt wird, eine Menge eines in das heiße Wasser, das für den siebten Eintauchvorgang verwendet wird, eluierten Butadienmonomers weniger als 0,13 µg/l beträgt (mit der Maßgabe, dass das S/V-Verhältnis 5,0 dm⁻¹ beträgt).

12. Mechanisches Bauteil und Gehäuse, umfassend den Formgegenstand nach Anspruch 10 oder 11.

13. Verwendung des mechanischen Bauteils und Gehäuses nach Anspruch 12 in Kontakt mit Trinkwasser.

14. Verfahren zur Herstellung einer Harzzusammensetzung nach Anspruch 1, wobei das Verfahren das Schmelzkneten von:
20 bis 50 Massen-% des Polyphenylenether-basierten Harzes (a);
15 bis 50 Massen-% des Homopolystyrols (c);
5 bis 35 Massen-% der Glasfasern (e); und
0,01 bis 1 Massen-% der einen oder mehreren Verbindungen (f), ausgewählt aus der Gruppe bestehend aus Magnesiumoxid, Magnesiumhydroxid, Magnesiumcarbonat, Magnesiumsilicat, Aluminiumhydroxid, Aluminiumsilicat und Hydrotalcit,
beinhaltet.

## Revendications

1. Composition de résine comprenant :
20 à 50 % en masse d'une résine à base de polyphénylène éther (a) ;
15 à 50 % en masse d'un homo-polystyrène (c) ;
5 à 35 % en masse de fibres de verre (e) ; et
0,01 à 1 % en masse d'un ou plusieurs composés (f) choisis dans le groupe constitué d'oxyde de magnésium, d'hydroxyde de magnésium, de carbonate de magnésium, de silicate de magnésium, d'hydroxyde d'aluminium, de silicate d'aluminium et d'hydrotalcite.

2. Composition de résine selon la revendication 1, comprenant en outre 1 à 25 % en masse d'un ou plusieurs éléments choisis dans le groupe constitué d'un copolymère séquencé hydrogéné obtenu par hydrogénation d'au moins une partie d'un copolymère séquencé contenant une séquence polymère X composée principalement d'un composé à base de styrène et une séquence polymère Y composée principalement d'un composé de diène conjugué (d-1) et d'un polystyrène modifié par du caoutchouc (d-2).

3. Composition de résine selon la revendication 1 ou 2, comprenant en outre 0,1 à 5 % en masse d'un polyéthylène (h).

4. Composition de résine selon l'une quelconque des revendications 1 à 3, comprenant en outre 1 à 10 000 ppm en masse d'un ou plusieurs composés (g) choisis dans le groupe constitué d'acides gras, d'esters d'acides gras, de sels métalliques d'acides gras et d'amides d'acides gras.

5. Composition de résine selon l'une quelconque des revendications 1 à 4, dans laquelle les fibres de verre (e) sont des fibres de verre qui sont traitées en surface avec au moins un agent de couplage de silane et un polyuréthane à base d'éther et/ou un polyuréthane à base d'ester.

6. Composition de résine selon l'une quelconque des revendications 1 à 5, comprenant en outre 0,1 à 9 % en masse d'une résine à base de polyphénylène éther modifiée par un acide carboxylique insaturé ou un anhydride d'acide de celui-ci (b).

7. Composition de résine selon l'une quelconque des revendications 1 à 6, dans laquelle le composé (f) est l'hydrotalcite.

8. Composition de résine selon l'une quelconque des revendications 1 à 6, comprenant un ou plusieurs ignifugeants choisis dans le groupe constitué d'esters de monophosphate et d'esters de phosphate condensés.

9. Composition de résine selon l'une quelconque des revendications 1 à 6, comprenant un polystyrène modifié par du caoutchouc (d-2).

10. Article moulé comprenant la composition de résine selon l'une quelconque des revendications 1 à 9.

11. Article moulé selon la revendication 10, dans lequel, lorsque l'article moulé (surface : S dm²) est immergé dans de l'eau chaude (volume : V dm³) maintenue à une température de 85 ± 2 °C et que le changement de l'eau chaude et l'immersion sont répétés, une quantité d'un monomère de butadiène élué dans l'eau chaude utilisée pour une septième immersion est inférieure à 0,13 µg/L (à condition que le rapport S/V soit de 5,0 dm⁻¹).

12. Composant mécanique et boîtier comprenant l'article moulé selon la revendication 10 ou 11.

13. Utilisation du composant mécanique et du boîtier selon la revendication 12, en contact avec de l'eau potable.

14. Procédé destiné à produire une composition de résine selon la revendication 1, le procédé comprenant le malaxage à l'état fondu de
20 à 50 % en masse de la résine à base de polyphénylène éther (a) ;
15 à 50 % en masse de l'homopolystyrène (c) ;
5 à 35 % en masse des fibres de verre (e) ; et
0,01 à 1 % en masse de l'un ou plusieurs composés (f) choisis dans le groupe constitué d'oxyde de magnésium, d'hydroxyde de magnésium, de carbonate de magnésium, de silicate de magnésium, d'hydroxyde d'aluminium, de silicate d'aluminium et d'hydrotalcite.
